# EUROPEAN PATENT APPLICATION

(11) **EP 4 632 527 A1**
(43) Date of publication of application: **15.10.2025**
(21) Application number: 25169931.0
(22) Date of filing: 11.04.2025
(51) Int. Cl.: G05G 5/03, B60T 8/40, G05G 1/30, G05G 1/46

(54) **PEDAL SIMULATOR**

(30) Priority: 11.04.2024 KR 20240048619
(71) Applicant: HL Mando Corporation, Pyeongtaek-si, Gyeonggi-do 17962 (KR)
(72) Inventor: KIM, Heejun, 17962 Pyeongtaek-si, Gyeonggi-do (KR); HONG, Sungjun, 17962 Pyeongtaek-si, Gyeonggi-do (KR)
(74) Representative: Pfenning, Meinig & Partner mbB

(57) **Abstract**

A pedal simulator (100) may include a housing (110); a piston (130), a front portion of which is arranged inside the housing and connected to a pedal (10) of a vehicle, and configured to be movable forward or backward in response to movement of the pedal; a reaction force member (140) arranged inside the housing and configured to be compressible by the forward movement of the piston and configured to provide a reaction force against the forward movement of the piston; and a friction member (150) movably disposed in the housing, configured to be elastically deformable such that the friction member is compressed when being moved in the backward direction and the friction member is expanded when being moved in the forward direction, and being in contact with the outer surface of the piston to apply friction to the movement of the piston and move in a same direction as the movement of piston.

## Description

### CROSS-REFERENCE TO RELATED APPLICATION

This application claims priority to and the benefit of Korean Patent Application No.10-2024- 0048619, filed on April 11, 2024, which is incorporated herein by reference in its entirety.

### Technical Field

The present disclosure generally relates to a pedal simulator, and more particularly, to a pedal simulator that provides a reaction force for the operation of a pedal of a vehicle.

### Related Art

A pedal simulator may be comprised in a vehicle to provide a reaction force against a pedal effort when a driver presses a pedal. For example, the pedal simulator may be associated with or included in a brake system of the vehicle to provide a reaction force against the operation of the brake pedal.

In order to reduce noise and improve operability, pedal simulators may have a structure in which a dry-bush with low frictional force is arranged in an area where the piston reciprocates. Accordingly, the reaction force against the operation of the pedal depends only on the damper, the spring, etc. and shows a linear reaction force increase characteristic. Therefore, in conventional pedal simulators, the driver is not provided with proper pedal feeling when the driver presses the pedal, and even when the driver releases the pedal effort, the driver's fatigue may be increased by receiving the same resistance as when applying the pedal effort.

### SUMMARY

Some embodiments of the present disclosure may be to solve the above problems, and certain embodiments of the present disclosure may be related to a pedal simulator that enables a driver to feel a natural and stable pedal feeling by providing non-linear reaction force according to the operation of a pedal.

Some embodiments of the present disclosure may be also related to a pedal simulator that improves pedal feeling and reduces driver fatigue by providing different change paths for the reaction force provided to the driver when pedal effort is applied to the pedal and when the pedal effort applied to the pedal is released, respectively.

The objects of the present disclosure are not limited to the above-described objects, and other objects that are not mentioned will be able to be clearly understood by those skilled in the art to which the present disclosure pertains from the following description.

According to an aspect of the present disclosure, provided is a pedal simulator, including a housing; a piston, at least a front portion of which is arranged inside the housing and connected to a pedal of a vehicle, and configured to move forward or backward according to the movement of the pedal; a reaction force member arranged inside the housing to be compressed in accordance with the forward movement of the piston and configured to provide a reaction force to the forward movement of the piston; and a friction member that is arranged inside the housing and is elastically deformable, in contact with the outer surface of the piston to move forward when the piston moves forward and move backward when the piston moves backward, wherein the friction member is arranged to expand when moving forward and to be compressed when moving backward, and provides a relatively greater resistance force to the progress of the piston when the piston moves backward than when the piston moves forward.

In the pedal simulator according to an aspect of the present disclosure, the friction member may have a ring shape that is disposed to surround an outer surface of the piston.

In the pedal simulator according to an aspect of the present disclosure, the friction member may include a portion having a radial thickness that increases from the rear to the front based on forward and backward directions of the piston.

In the pedal simulator according to an aspect of the present disclosure, the housing may include a groove in which the friction member is disposed to move forward or backward, and the groove may include a portion in which a depth of a front side is formed larger than that of a rear side based on the forward and backward directions of the piston.

In the pedal simulator according to an aspect of the present disclosure, the groove may have a maximum depth equal to or greater than a maximum thickness of the friction member and a minimum depth less than a minimum thickness of the friction member.

In the pedal simulator according to an aspect of the present disclosure, the housing may include a guide tube through which the piston passes and is disposed, and the groove may be provided on an inner surface of the guide tube.

In the pedal simulator according to an aspect of the present disclosure, the housing may further include a chamber in communication with the guide tube and disposed in front of the guide tube, the reaction force member may be disposed in the chamber, and the pedal simulator according to an aspect of the present disclosure may further include an additional reaction force member arranged to overlap the reaction force member to provide resistance force when the piston moves forward.

In the pedal simulator according to an aspect of the present disclosure, the piston may include a piston head in contact with the reaction force member and arranged in the chamber; and a piston body connected to the piston head and arranged through the guide tube.

In the pedal simulator according to an aspect of the present disclosure, the housing may further include a first invagination portion formed by being spaced forward of the groove and invaginated into an inner surface of the guide tube, and the pedal simulator according to an aspect of the present disclosure may further include a first guide member arranged in the first invagination portion and configured to support the piston body when the piston moves forward or backward.

In the pedal simulator according to an aspect of the present disclosure, the housing may further include a second invagination portion formed by being spaced backward of the groove and invaginated into an inner surface of the guide tube, and the pedal simulator according to an aspect of the present disclosure may further include a second guide member arranged in the second invagination portion and configured to support the piston body when the piston moves forward or backward.

According to another aspect of the present disclosure, provided is a pedal simulator configured to provide pedal effort to a pedal of a vehicle, the pedal simulator including a housing; a piston, at least a front portion of which is arranged inside the housing and connected to a pedal of a vehicle, and configured to move forward or backward according to the movement of the pedal; and a friction member that is arranged inside the housing and is elastically deformable, in contact with the outer surface of the piston to move forward when the piston moves forward and move backward when the piston moves backward, wherein the friction member is arranged to expand when moving forward and to be compressed when moving backward, and provides a relatively greater resistance force to the progress of the piston when the piston moves backward than when the piston moves forward.

In the pedal simulator according to another aspect of the present disclosure, the friction member may have a ring shape that is disposed to surround an outer surface of the piston.

In the pedal simulator according to another aspect of the present disclosure, the friction member may include a portion having a radial thickness that increases from the rear to the front based on forward and backward directions of the piston.

In the pedal simulator according to another aspect of the present disclosure, the housing may include a groove in which the friction member is disposed to move forward or backward, and the groove may include a portion in which a depth of a front side is formed larger than that of a rear side based on the forward and backward directions of the piston.

In the pedal simulator according to another aspect of the present disclosure, the groove may have a maximum depth equal to or greater than a maximum thickness of the friction member and a minimum depth less than a minimum thickness of the friction member.

In the pedal simulator according to another aspect of the present disclosure, the housing may include a guide tube through which the piston passes and is disposed, and the groove may be provided on an inner surface of the guide tube.

In the pedal simulator according to another aspect of the present disclosure, the housing may further include a chamber in communication with the guide tube and disposed in front of the guide tube.

In the pedal simulator according to another aspect of the present disclosure, the piston may include a piston head arranged in the chamber; and a piston body connected to the piston head and arranged through the guide tube.

In the pedal simulator according to another aspect of the present disclosure, the housing may further include a first invagination portion formed by being spaced forward of the groove and invaginated into an inner surface of the guide tube, and the pedal simulator according to another aspect of the present disclosure may further include a first guide member arranged in the first invagination portion and configured to support the piston body when the piston moves forward or backward.

In the pedal simulator according to another aspect of the present disclosure, the housing may further include a second invagination portion formed by being spaced backward of the groove and invaginated into an inner surface of the guide tube, and the pedal simulator according to another aspect of the present disclosure may further include a second guide member arranged in the second invagination portion and configured to support the piston body when the piston moves forward or backward.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings, in which:
FIG. 1 is a diagram illustrating a configuration of a brake system of a vehicle including a pedal simulator according to an exemplary embodiment of the present disclosure;
FIG. 2 is a perspective view of a pedal simulator according to an exemplary embodiment of the present disclosure;
FIG. 3 is a perspective view of a pedal simulator with a partial longitudinal cross section of a housing of the pedal simulator according to an exemplary embodiment of the present disclosure;
FIG. 4 is an exploded perspective view of a pedal simulator according to an exemplary embodiment of the present disclosure;
FIG. 5 is a longitudinal cross-sectional view of a pedal simulator according to an exemplary embodiment of the present disclosure;
FIG. 6 is a longitudinal cross-sectional perspective view of a rear part of a housing of a pedal simulator according to an exemplary embodiment of the present disclosure;
FIG. 7 is a front perspective view of a housing of a pedal simulator according to an exemplary embodiment of the present disclosure;
FIG. 8 is an enlarged view of part A in FIG. 5;
FIG. 9 is an exploded perspective view of a friction member of a pedal simulator according to an exemplary embodiment of the present disclosure;
FIG. 10 is a cross-sectional perspective view of a friction member of a pedal simulator according to an exemplary embodiment of the present disclosure;
FIG. 11 is a cross-sectional view illustrating a state of a friction member when a piston of a pedal simulator is moved forward according to an exemplary embodiment of the present disclosure;
FIG. 12 is a cross-sectional view illustrating a state of a friction member when a piston of a pedal simulator is moved backward according to an exemplary embodiment of the present disclosure;
FIG. 13 is a cross-sectional perspective view illustrating a friction member of a pedal simulator including a reinforcing part according to an exemplary embodiment of the present disclosure;
FIG. 14 is a perspective view of a first guide member and a second guide member of a pedal simulator according to an exemplary embodiment of the present disclosure;
FIG. 15 is a cross-sectional perspective view of a first guide member and a second guide member of a pedal simulator according to an exemplary embodiment of the present disclosure; and
FIG. 16 is a graph illustrating a path of change in a reaction force with respect to an operation of a pedal when a pedal simulator is operated according to an exemplary embodiment of the present disclosure.

### DETAILED DESCRIPTION OF EMBODIMENTS

Hereinafter, embodiments of the present disclosure will be described in detail so that those skilled in the art to which the present disclosure pertains can easily carry out the embodiments. The present disclosure may be implemented in many different forms and is not limited to the embodiments described herein. In order to clearly describe the present disclosure, portions not related to the description are omitted from the accompanying drawings, and the same or similar components are denoted by the same reference numerals throughout the specification.

The words and terms used in the specification and the claims are not limitedly construed as their ordinary or dictionary meanings, and should be construed as meaning and concept consistent with the technical spirit of the present disclosure in accordance with the principle that the inventors can define terms and concepts in order to best describe their invention.

In the specification, it should be understood that the terms such as "comprise" or "have" are intended to specify the presence of features, numbers, steps, operations, components, parts, or combinations thereof described in the specification and do not preclude the possibility of the presence or addition of one or more other features, numbers, steps, operations, components, parts, or combinations thereof.

The presence of an element in/on "front", "rear", "upper or above or top" or "lower or below or bottom" of another element includes not only being disposed in/on "front", "rear", "upper or above or top" or "lower or below or bottom" directly in contact with other elements, but also cases in which another element being disposed in the middle, unless otherwise specified. In addition, unless otherwise specified, that an element is "connected" to another element includes not only direct connection to each other but also indirect connection to each other.

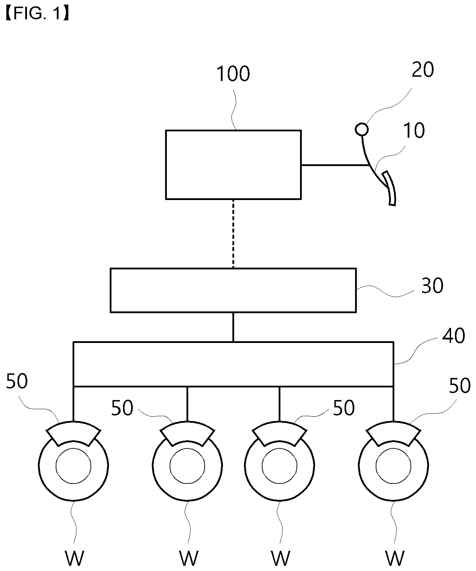

FIG. 1 is a diagram illustrating a configuration of a brake system of a vehicle including a pedal simulator according to an exemplary embodiment of the present disclosure.

A pedal simulator 100 is comprised in a vehicle. The pedal simulator 100 is configured to provide a reaction force, that is, a pedal feeling, which responds when the driver presses the pedal.

Referring to FIG. 1, the pedal simulator 100 may be included in a brake system of the vehicle. In more detail, the pedal simulator 100 may be comprised in the brake system of the vehicle to generate a reaction force in response to the operation of a brake pedal 10.

A displacement sensor 20 detects the displacement of the brake pedal 10. The displacement sensor 20 may detect an angle change of the brake pedal 10, a displacement amount or distance of the brake pedal 10, and the like. For example, the displacement sensor 20 may be an angle sensor that detects an angle of the brake pedal 10.

Information on displacement of the brake pedal 10 detected by the displacement sensor 20 may be transmitted to a pump 30 configured to generate braking hydraulic pressure. The pump 30 may generate braking hydraulic pressure corresponding to the information of the displacement of the brake pedal 10.

The braking hydraulic pressure generated by the pump 30 may be supplied to a brake 50 mounted to a wheel W of the vehicle through a hydraulic circuit 40 configured to form a hydraulic path between the pump 30 and the wheel W of the vehicle. The braking of the vehicle may be achieved by the operation of the brake 50 caused by the braking hydraulic pressure.

Hereinafter, the pedal simulator 100 according to an exemplary embodiment of the present disclosure will be described in detail.

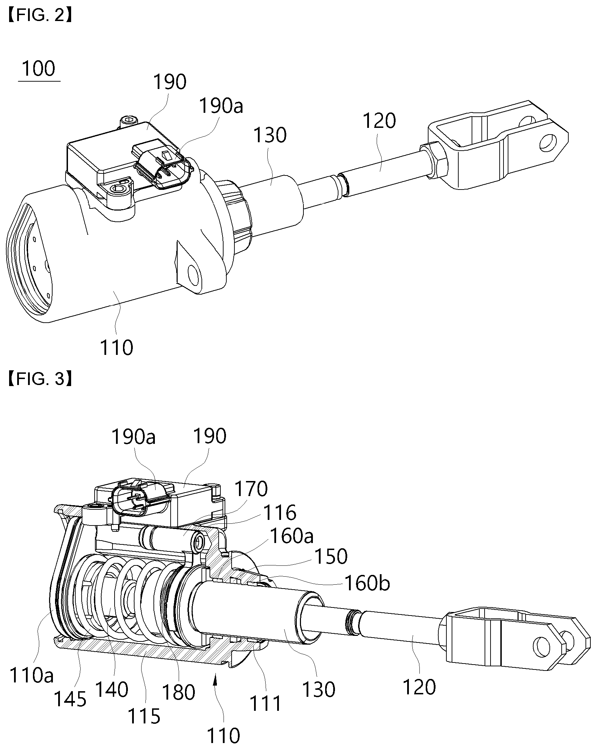

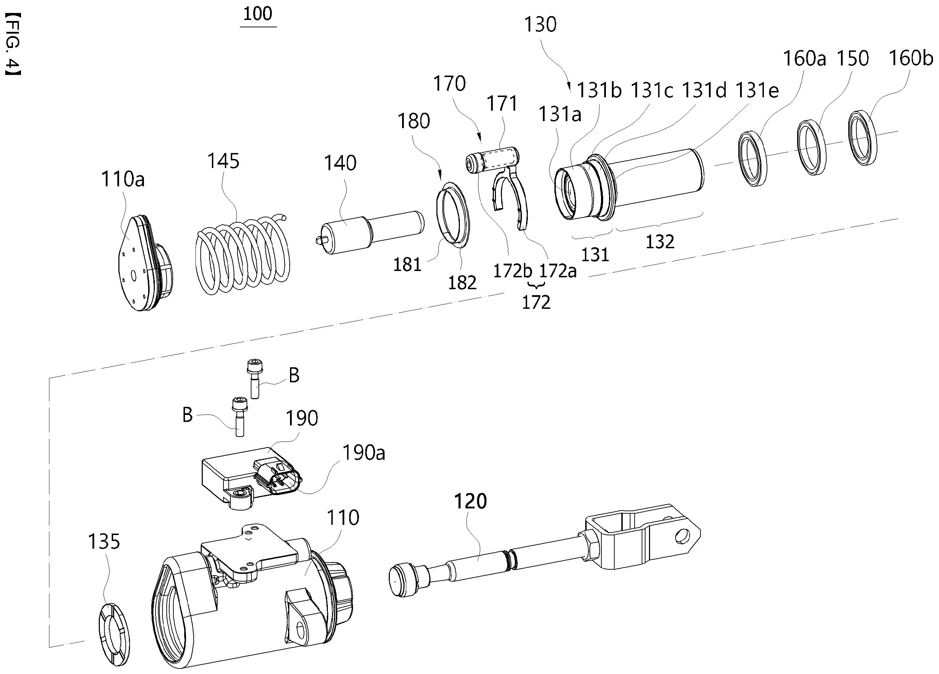

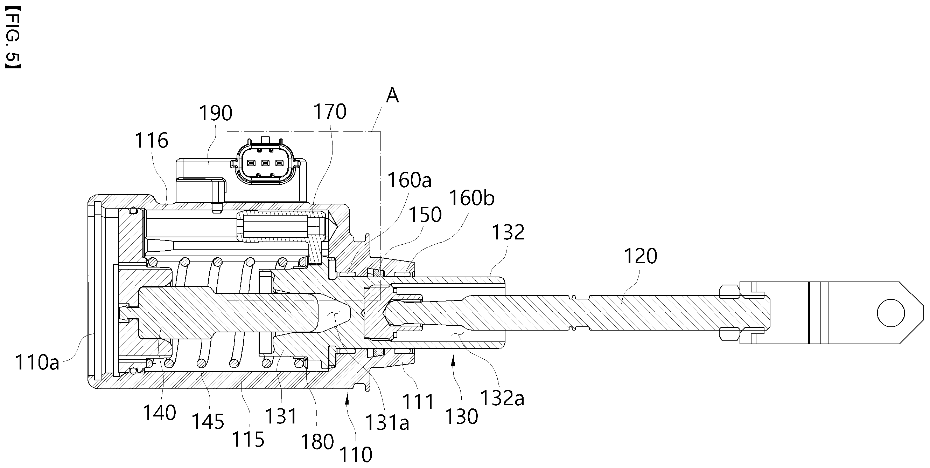

FIG. 2 is a perspective view of a pedal simulator according to an exemplary embodiment of the present disclosure. FIG. 3 is a perspective view of a pedal simulator with a partial longitudinal cross section of a housing of the pedal simulator according to an exemplary embodiment of the present disclosure. FIG. 4 is an exploded perspective view of a pedal simulator according to an exemplary embodiment of the present disclosure. FIG. 5 is a longitudinal cross-sectional view of a pedal simulator according to an exemplary embodiment of the present disclosure.

Hereinafter, with respect to the relative position and direction of components of the pedal simulator 100, it will be described that a housing 110 is disposed in front of an input shaft 120 for illustration purposes only. That is, a side where the housing 110 is located is described as forward and a side where the input shaft 120 is located is described as backward.

In addition, in relation to the direction of movement of the piston 130, the movement of the piston 130 from the input shaft 120 toward the housing 110 is defined as a forward direction, and the movement of the piston 130 from the housing 110 toward the input shaft 120 is defined as a backward direction.

Referring to FIGS. 2 to 5, the pedal simulator 100 according to an exemplary embodiment of the present disclosure may include a housing 110, an input shaft 120, a piston 130, a reaction force member 140, a friction member 150, a first guide member 160a, and a second guide member 160b.

The piston 130, the reaction force member 140, the friction member 150, the first guide member 160a, and the second guide member 160b, may be disposed in the housing, although not required. In an embodiment of the present disclosure, the housing 110 may include a guide tube 111, a groove 112, a first invagination portion 113, a second invagination portion 114, a first chamber 115, and a second chamber 116.

The guide tube 111 has an inner hollow space so that the piston 130 can passes through the guide tube 111. The guide tube 111 may be disposed at a rear portion of the housing 110. For instance, the guide tube 111 may extend through the rear of the housing 110.

The hollow of the guide tube 111 may have a shape corresponding to the shape of the piston 130 disposed therein. For example, the guide tube 111 may have a cylindrical shape.

The groove 112 is provided such that the friction member 150 is movably disposed in the groove 112. The friction member 150 may be displaceable forward or backward within the groove 112. The groove 112 is formed on an inner surface of the housing 110.

In an embodiment of the present disclosure, the groove 112 may be provided on an inner surface of the guide tube 111. For example, when the guide tube 111 has a cylindrical shape, the groove 112 may be formed in a circular shape along the circumferential direction on the inner circumferential surface of the guide tube 111.

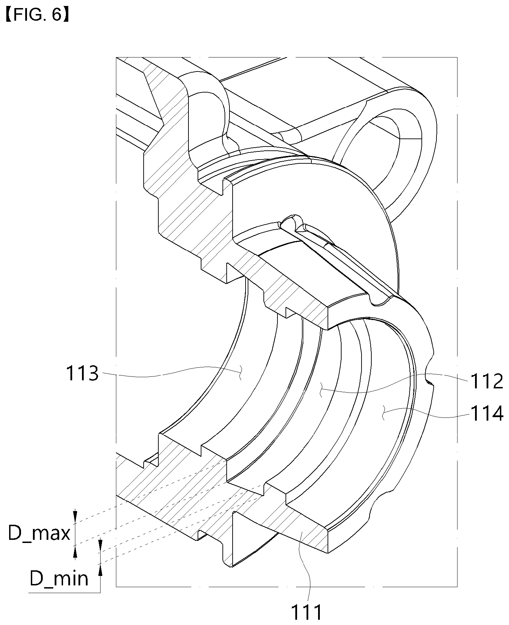

FIG. 6 is a longitudinal cross-sectional perspective view of a rear part of a housing of a pedal simulator according to an exemplary embodiment of the present disclosure.

Referring to FIG. 6, a depth of the front portion of the groove 112 is greater than a depth of the rear portion of the groove 112. The front portion of the groove 112 is located farther from the piston 130 than the rear portion of the groove 112. Accordingly, the size of a space formed by the front portion of the groove 112, in which the friction member 150 moves forward and is disposed inside the groove 112, may be larger than the size of a space formed by the rear portion of the groove 112, in which the friction member 150 moves backward and is disposed inside the groove 112.

The groove 112 becomes deeper from the rear portion of the groove 112 to the front portion of the groove 112. The front portion of the groove 112 is located farther from the piston 130 than the rear portion of the groove 112. Accordingly, the groove 112 may provide a structure providing a space in which the friction member 150 is placed gradually widens from the rear portion to the front portion of the groove 112.

The groove 112 has a maximum depth D_max and a minimum depth D_min. In an embodiment of the present disclosure, the depth of the groove 112 gradually increases from the rear portion to the front portion of the groove 112. Accordingly, the groove 112 may have the maximum depth D_max at the front end of the groove 112 and the minimum depth D_min at the rear end of the groove 112.

The first invagination portion 113 is formed by being spaced forward of the groove 112 and invaginated into the inner surface of the guide tube 111. The first invagination portion 113 is located more internally than the groove 112 in the guide tube 111. For example, the first invagination portion 113 may be a recess formed on the inner surface of the guide tube 111 having and an opening at one side of the recess. A protrusion may be provided between the first invagination portion 113 and the groove 112. The first guide member 160a configured to support a piston body 132 when the piston 130 moves forward or backward is disposed in the first invagination portion 113.

The first invagination portion 113 may have a shape in which a front portion is opened. This shape of the first invagination portion 113 can allow the first guide member 160a to be easily inserted into the first invagination portion 113 through the opened portion (e.g. a front portion) of the first invagination portion 113.

The second invagination portion 114 is formed by being spaced rearward of the groove 112 and invaginated into the inner surface of the guide tube 111. The second invagination portion 114 is located more externally than the groove 112 in the guide tube 111. For example, the second invagination portion 114 may be a recess formed on the inner surface of the guide tube 111 having and an opening at one side of the recess. A protrusion may be provided between the second invagination portion 114 and the groove 112. The second guide member 160b configured to support the piston body 132 when the piston 130 moves forward or backward is disposed in the second invagination portion 114.

The second invagination portion 114 may have a shape in which a rear portion is opened. This shape of the second invagination portion 114 can allow the second guide member 160b to be easily inserted into the second invagination portion 114 through the opened portion (e.g. a rear portion) of the second invagination portion 114.

The first chamber 115 is provided so that the piston 130 and the reaction force member 140 are disposed in the first chamber 115. The first chamber 115 may be disposed in front of the guide tube 111 and configured to be in communication with the guide tube 111. In an embodiment of the present disclosure, the first chamber 115 may be formed to have an inner diameter larger than an inner diameter of the guide tube 111 in front of the guide tube 111 and extend forward (e.g. in a direction away from the guide tube 111).

The first chamber 115 may have, for example, but not limited to, a cylindrical shape. The first chamber 115 may extend in the front-rear direction within the housing 110. For instance, the inner diameter of the first chamber 115 may be formed to correspond to the outer diameter of the piston 130. More specifically, the inner diameter of the first chamber 115 may be substantially identical or similar to the maximum outer diameter of a piston head 131 of the piston 130 in order to stably guide the forward or backward movement of the piston 130 inside the first chamber 115.

The second chamber 116 is formed side by side with the first chamber 115 and is provided such that a displacement member 170 is disposed in the second chamber 116. For instance, the first chamber 115 and the second chamber 116 extend in directions parallel to each other. The second chamber 116 may have, for example, but not limited to, a cylindrical shape. The second chamber 116 may extend in the front-rear direction within the housing 110. In more detail, the second chamber 116 may extend forward and backward side by side with the first chamber 115.

The second chamber 116 may have an inner diameter corresponding to a dimension of the displacement member 170. Accordingly, the forward or backward movement of the displacement member 170 inside the second chamber 116 may be stably guided.

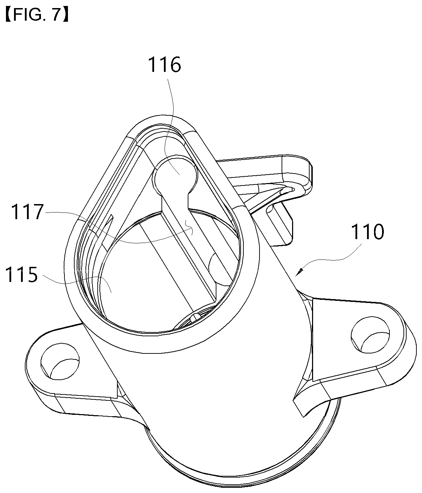

FIG. 7 is a front perspective view of a housing of a pedal simulator according to an exemplary embodiment of the present disclosure.

Referring to FIG. 7, a long groove or slit 117 may be formed between the first chamber 115 and the second chamber 116. That is, the first chamber 115 and the second chamber 116 may communicate with each other through the long groove or slit 117.

A part of the displacement member 170 may pass through the long groove or slit 117 and be disposed in the long groove or slit 117. More specifically, the displacement member 170 disposed in the second chamber 116 is coupled to the piston 130 by passing through the long groove or slit 117.

In an embodiment of the present disclosure, the housing 110 has an open front end. Accordingly, some components of the pedal simulator 100 such as the piston 130, the reaction force member 140, and the displacement member 170 may be inserted into the housing 110 through the open front end of the housing 110 and be arranged in the housing 110. As described above, since the housing 110 has an open front side, the pedal simulator 100 may be easily assembled.

In this regard, the pedal simulator 100 may further include a housing cover 110a disposed to cover the open front end of the housing 110. In an embodiment of the present disclosure, the housing cover 110a may be coupled to the housing 110 to seal or cover an open portion of the front end of the housing 110.

The input shaft 120 is connected to the pedal 10 so as to be moved according to the displacement of the pedal 10 of the vehicle. The input shaft 120 may be arranged to extend to the rear of the housing 110.

In an embodiment of the present disclosure, the input shaft 120 may connect the brake pedal 10 to the piston 130. The input shaft 120 may be connected to the brake pedal 10 and be configured to be movable forward or backward according to the operation of the brake pedal 10. More specifically, when the brake pedal 10 is stepped on or pressed by the driver of the vehicle, the input shaft 120 may be moved forward. In addition, when the pedal effort of the driver is released and the brake pedal 10 returns to the original position before operation, the input shaft 120 may be moved backward.

At least a portion of the front side of the piston 130 is disposed inside the housing 110. The piston 130 may be connected to the input shaft 120 to be moved forward or backward according to the movement of the input shaft 120.

Referring to FIGS. 3 to 5, the piston 130 includes a piston head 131 and a piston body 132.

The piston head 131 is arranged to be in contact with the reaction force member 140 and is disposed in the first chamber 115. The piston head 131 is disposed to be in contact with the reaction force member 140 so as to compress the reaction force member 140 when the piston 130 moves forward. In other words, when the piston 130 moves forward, the piston head 131 receives a reaction force according to the compression of the reaction force member 140.

The piston head 131 may have a substantially cylindrical shape. In addition, the piston head 131 may have a reaction force member groove 131a formed along the axial direction so that the reaction force member 140 is inserted therein. The reaction force member groove 131a may be formed to a predetermined depth along the longitudinal axis of the piston 130 at the front end of the piston head 131.

Referring to FIGS. 4 to 5, and FIG. 8, which is an enlarged view of part A of FIG. 5, the piston head 131 may include a first outer diameter part 131c, a second outer diameter part 131d, and a third outer diameter part 131e.

The first outer diameter part 131c has a substantially cylindrical shape having a first outer diameter. The first outer diameter part 131c may have a through hole forming a part of the reaction force member groove 131a along the central axis in the longitudinal direction. A ring-shaped member or a ring part 180, which will be described later, may be coupled to the outer circumferential surface of the first outer diameter part 131c.

The second outer diameter part 131d has a second outer diameter greater than the first outer diameter and is disposed in rear of the first outer diameter part 131c. The second outer diameter part 131d may have a through hole forming a part of the reaction force member groove 131a along the central axis in the longitudinal direction.

The first outer diameter part 131c and the second outer diameter part 131d form a support step S2 at a boundary between the first outer diameter part 131c and the second outer diameter part 131d by the difference of the diameters of the first outer diameter part 131c and the second outer diameter part 131d. The ring-shaped member 180 may be supported by the support step S2.

The third outer diameter part 131e has a third outer diameter greater than the second outer diameter, protrudes radially outward, and is located in rear of the second outer diameter part 131d. The third outer diameter part 131e may have a through hole forming a part of the reaction force member groove 131a along the central axis in the longitudinal direction.

The third outer diameter part 131e may form a displacement member insertion groove G on the outer circumferential surface of the piston head 131 together with the ring-shaped member or the ring part 180. In more detail, the third outer diameter part 131e of the piston head 131 may form a displacement member insertion groove G along the circumferential direction of the piston head 131 together with the ring-shaped member or the ring part 180.

The displacement member 170 may be coupled to the displacement member insertion groove G formed by the third outer diameter part 131e and the ring-shaped member or the ring part 180.

In an embodiment of the present disclosure, the piston head 131 may further include a fourth outer diameter part 131b.

The fourth outer diameter part 131b has a fourth outer diameter smaller than the first outer diameter and is located in front of the first outer diameter part 131c. The ring-shaped member or the ring part 180 may enter the front side of the piston head 131 and be coupled to the first outer diameter part 131c, and the fourth outer diameter part 131b facilitates the ring-shaped member 180 to enter toward the first outer diameter part 131c.

An inclined portion S1 is formed between the fourth outer diameter part 131b and the first outer diameter part 131c. For example, the inclined portion S1 may be formed in a shape in which the outer diameter of the inclined portion S1 gradually increases from the fourth outer diameter part 131b toward the first outer diameter part 131c. If the inclined portion S1 is formed in a shape in which the outer diameter of the inclined portion S1 gradually increases from the front to the rear of the inclined portion S1, the entry from the fourth outer diameter part 131b to the first outer diameter part 131c may be smoothly guided when the ring-shaped member 180 is assembled to the piston 130.

The piston body 132 is connected to the piston head 131 and disposed to pass through the guide tube 111. It is connected to the rear of the piston head 131. The piston body 132 may have a predetermined outer diameter and may extend to the rear of the piston head 131.

The piston body 132 is connected to or extended from the input shaft 120. The piston body 132 may have a substantially cylindrical shape.

Referring to FIG. 5, the piston body 132 may have an input shaft groove 132a formed to have a predetermined depth forward from the rear end along the longitudinal central axis. In an embodiment of the present disclosure, the reaction force member groove 131a and the input shaft groove 132a do not communicate with or are not connected to each other.

The input shaft 120 is inserted into the input shaft groove 132a and disposed in the input shaft groove 132a. In more detail, a front portion of the input shaft 120 may be inserted into the input shaft groove 132a and disposed in the input shaft groove 132a. The front sidewall of the input shaft groove 132a is arranged to be in contact with the front end of the input shaft 120, and when the input shaft 120 is moved forward according to the operation of the brake pedal 10, the input shaft 120 presses the front sidewall of the input shaft groove 132a, thereby moving the piston 130 forward.

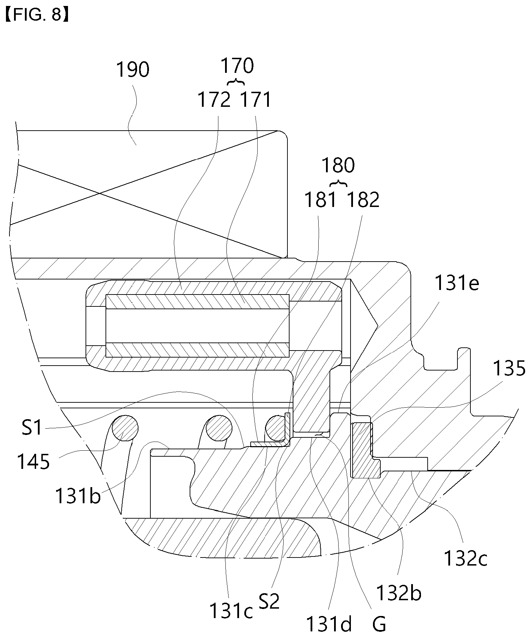

As shown in FIG. 8, the piston body 132 has an extension 132c extending in a cylindrical shape with a predetermined outer diameter. The above-described input shaft groove 132a may be formed along the central axis in the longitudinal direction of the extension 132c.

In an embodiment of the present disclosure, the piston body 132 may further include a shaft diameter part 132b recessed radially inward from a front portion of the extension 132c. A support ring 135 may be coupled to the shaft diameter part 132b. The support ring 135 may prevent the rear portion of the piston head 131 from directly contacting the wall of the housing 110 and may serve as a buffer or the like.

The reaction force member 140 is disposed inside the housing 110 to be compressible according to the forward movement of the piston 130, and is configured to generate reaction force to the forward movement of the piston 130. The reaction force member 140 provides a force to resist the forward movement of the piston 130 so that the driver of the vehicle may feel the pedal feeling.

The reaction force member 140 may have any structure that can provide an elastic restoring force that resists the forward movement of the piston 130. For instance, the reaction force member 140 may be made of a single material having elasticity.

In an embodiment of the present disclosure, the front end of the reaction force member 140 is supported by the housing cover 110a, and the rear end of the reaction force member 140 is supported by the piston 130. For instance, the rear portion of the reaction force member 140 may be inserted into and disposed in the reaction force member groove 131a of the piston head 131. In this case, the rear end of the reaction force member 140 may be supported by a sidewall of the reaction force member groove 131a.

The pedal simulator 100 according to an exemplary embodiment of the present disclosure may further include an additional reaction force member 145. The additional reaction force member 145 may be disposed to overlap the reaction force member 140 to provide additional resistance force when the piston 130 moves forward. For example, the additional reaction force member 145 may be a spring configured to be compressed when the piston 130 moves forward.

The additional reaction force member 145 may be configured to provide a pedal feeling to the driver together with the reaction force member 140. In addition, the additional reaction force member 145 may also serve to reverse the piston 130 so that the pedal can return to its original position when the pedal is not pressed by the driver.

The friction member 150 is disposed inside the housing 110 and arranged to contact the outer surface of the piston 130 so as to be moved forward when the piston 130 moves forward and be moved backward when the piston 130 moves backward. The friction member 150 may be disposed in the groove 112 of the housing 110.

The friction member 150 may have, for instance, but not limited to, a ring shape that is disposed to surround an outer surface of the piston 130. More specifically, the friction member 150 may be arranged to be in contact with an outer surface of the extension 132c of the piston body 132.

The friction member 150 is configured to be elastically deformable. The friction member 150 is configured to expand when moving forward and to be compressed when moving backward. The friction member 150 may provide a relatively greater resistance force to the progress of the piston 130 when the piston 130 moves backward than when the piston 130 moves forward.

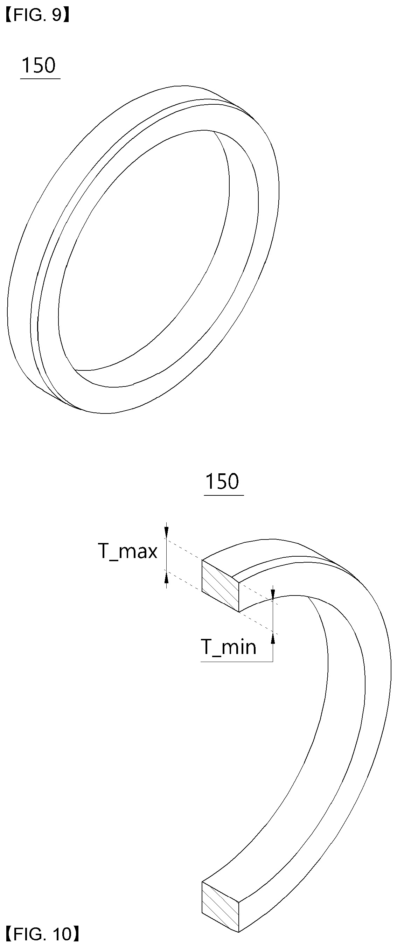

FIG. 9 is a perspective view of a friction member of a pedal simulator according to an exemplary embodiment of the present disclosure. FIG. 10 is a cross-sectional perspective view of a friction member of a pedal simulator according to an exemplary embodiment of the present disclosure.

Referring to FIGS. 9 and 10, the friction member 150 may have different radial thicknesses at the rear side and the front side based on forward and backward directions of the piston 130. For example, a radial thickness of the front portion of the friction member 150 is greater than a radial thickness of the rear portion the friction member 150.

The friction member 150 may include a portion having a radial thickness that increases from the rear to the front of the friction member 150 in the forward and backward directions of the piston 130. In an embodiment of the present disclosure, the friction member 150 is formed to have a portion extend from the rear end toward the front to have a radial thickness that increases in a direction from the rear to the front of the friction member 150.

The maximum thickness T_max of the friction member 150 may be less than or equal to the maximum depth D_max of the groove 112. In other words, the groove 112 may have the maximum depth D_max greater than or equal to the maximum thickness T_max of the friction member 150.

In an embodiment of the present disclosure, the maximum thickness T_max of the friction member 150 is formed at a front portion of the friction member 150. In addition, the maximum depth D_max of the groove 112 is formed at a front portion of the groove 112.

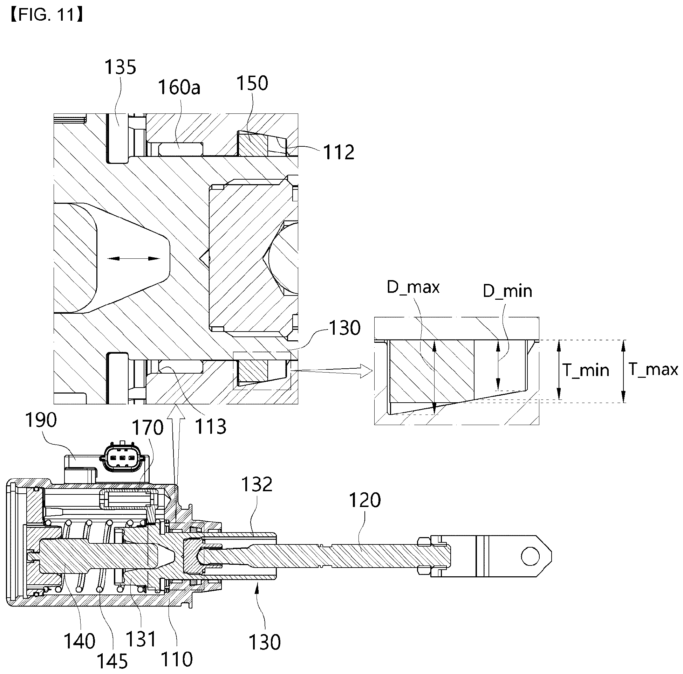

FIG. 11 is a cross-sectional view illustrating a state of a friction member when a piston of a pedal simulator is moved forward according to an exemplary embodiment of the present disclosure.

Referring to FIG. 11, when the friction member 150 is moved forward together with the piston 130 when the piston 130 moves forward and is placed in a position moved forward within the groove 112, a space in which the friction member 150 can smoothly expand is formed between the outer surface of the piston 130 and the inner surface of the groove 112. Accordingly, when the piston 130 moves forward, the friction member 150 may provide a relatively small resistance.

In more detail, the maximum thickness T_max of the friction member 150 is formed to be less than the maximum depth D_max of the groove 112. In other words, the maximum depth D_max of the groove 112 is greater than the maximum thickness T_max of the friction member 150. Accordingly, the friction member 150 may be in an expanded state when located at the front portion of the groove 112 in which the maximum depth D_max of the groove 112 is formed. In this case, the expanded state may mean that the friction member 150 is not compressed or is least compressed, or that the friction member 150 is in an uncompressed state.

In an embodiment of the present disclosure, the minimum thickness T_min of the friction member 150 is formed at a rear portion of the friction member 150. In addition, the minimum depth D_min of the groove 112 is formed at a rear portion of the groove 112.

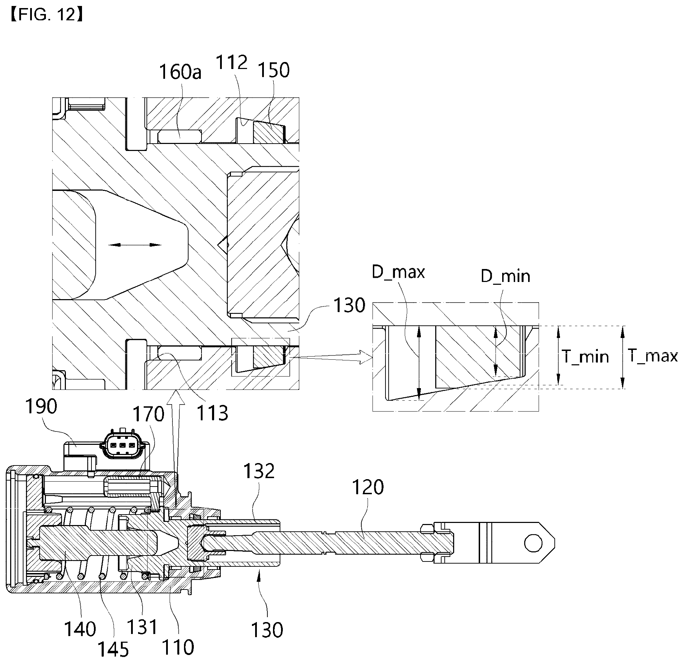

FIG. 12 is a cross-sectional view illustrating a state of a friction member when a piston of a pedal simulator is moved backward according to an exemplary embodiment of the present disclosure.

Referring to FIG. 12, when the friction member 150 is moved backward with the piston 130 when the piston 130 moves backward and is placed in a position moved backward within the groove 112, a space in which the friction member 150 can be compressed is formed between the outer surface of the piston 130 and the inner surface of the groove 112, and the friction member 150 is compressed. Accordingly, when the piston 130 moves backward, the friction member 150 may provide a relatively large resistance.

In more detail, the minimum thickness T_min of the friction member 150 is greater than the minimum depth D_min of the groove 112. That is, the minimum depth D_min of the groove 112 is smaller than the minimum thickness T_min of the friction member 150. Accordingly, the friction member 150 may be in a compressed state when located at a rear portion of the groove 112 in which the minimum depth D_min of the groove 112 is formed.

When the friction member 150 is in a position moved backward in the groove 112, the friction member 150 is compressed between the inner wall of the groove 112 and the outer surface of the piston 130 to be in close contact with the outer surface of the piston 130 and provide resistance force to the reverse of the piston 130. In consideration of the shear stress, the friction member 150 may generate a greater resistance in deformation.

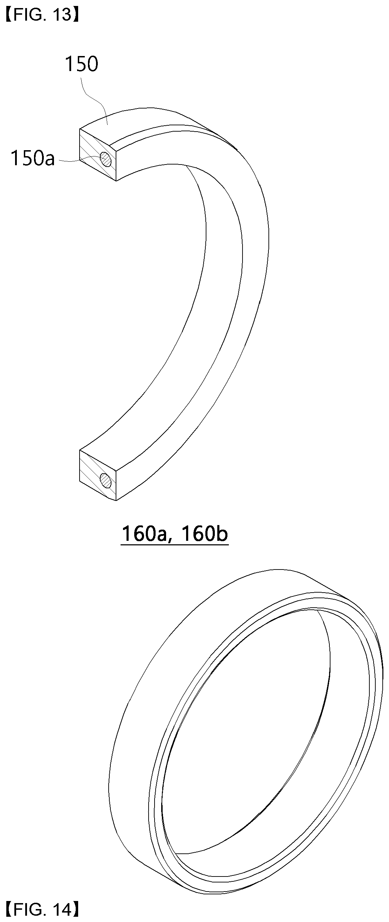

FIG. 13 is a cross-sectional perspective view illustrating a friction member of a pedal simulator including a reinforcing part according to an exemplary embodiment of the present disclosure.

Referring to FIG. 13, the friction member 150 may further include a reinforcing part 150a or a material for reinforcing the friction member 150. The friction member 150 moves forward or backward in the groove 112 and repeats compression and expansion. The reinforcing part 150a is disposed inside or outside the friction member 150 to increase durability against elastic deformation of the friction member 150.

As described above, the rear portion of the friction member 150 is compressed in the groove 112 when the friction member 150 is moved from the front to the rear. Since the rear portion of the friction member 150 is repeatedly compressed during the operation of the pedal simulator 100, the elastic force of the rear portion may be further weakened compared to the front portion as the movement of the friction member 150 is repeated over and over again. In order to prevent this and to continuously provide an appropriate resistance force when the piston 130 moves backward, the elastic reinforcing part 150a may be disposed at the rear portion of the friction member 150.

For example, the reinforcing part 150a may have a ring-shaped elastic reinforcing material embedded in the rear portion of the friction member 150. The material of the reinforcing part 150a may be stiffer than the material of the other part of the friction member 150. This is only an example for illustration purposes only, and the reinforcing part 150a may be attached to the surface of the friction member 150, and various other forms may be considered.

The first guide member 160a is disposed in the first invagination portion 113 to support the piston 130 when the piston 130 moves forward or backward. In an embodiment of the present disclosure, the first guide member 160a supports the piston body 132.

The second guide member 160b is disposed in the second invagination portion 114 to support the piston 130 when the piston 130 moves forward or backward. In an embodiment of the present disclosure, the second guide member 160b supports the piston body 132.

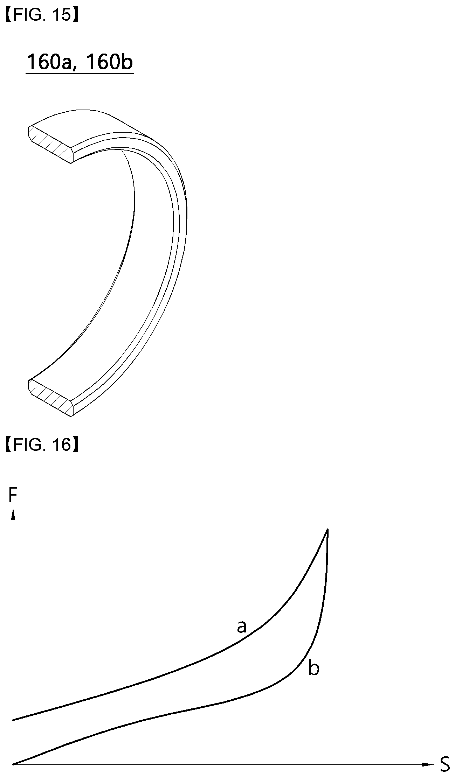

FIG. 14 is a perspective view of a first guide member and a second guide member of a pedal simulator according to an exemplary embodiment of the present disclosure. FIG. 15 is a cross-sectional perspective view of a first guide member and a second guide member of a pedal simulator according to an exemplary embodiment of the present disclosure.

Referring to FIGS. 14 and 15, the first guide member 160a and the second guide member 160b may have a ring shape. For example, the first guide member 160a and the second guide member 160b may be dry-bush.

The first guide member 160a and the second guide member 160b have a smaller frictional force when being in contact with the piston 130 than the friction member 150. When the friction member 150 provides resistance force to the movement of the piston 130 so that an appropriate reaction force is provided to the driver when the piston 130 moves forward or backward, the first guide member 160a and the second guide member 160b may be disposed in front and rear of the friction member 150, respectively, to guide the movement of the piston 130, improve operability, and reduce noise.

Referring to FIGS. 3 to 5, 8, 11, and 12, the pedal simulator 100 according to an exemplary embodiment of the present disclosure may further include a displacement member 170, a ring-shaped member 180, and a sensor 190.

The displacement member 170 is connected to the piston 130 and disposed inside the housing 110, and is configured to be displaceable or movable together with the piston 130. By detecting the position of the displacement member 170 or a change in the position of the displacement member 170, the position of the piston 130 may be identified or determined. Since the displacement of the piston 130 is made in response to the displacement of the input shaft 120 connected to a pedal of a vehicle, the displacement of the pedal may be identified based on the position of the piston 130.

The displacement member 170 may include a magnet 171. As the displacement member 170 includes the magnet 171, the sensor 190 to be described later may detect a change in the magnetic field generated from the magnet 171 of the displacement member 170 according to a change in the position of the displacement member 170.

Referring to FIGS. 4 and 8, the displacement member 170 may further include a holder 172 configured to retain or support the magnet 171 and coupled to an outer circumferential surface of the piston 130. The holder 172 couples the magnet 151 to the piston 130 so that the magnet 151 can move forward or backward together with the piston 130 according to the forward or backward movement of the piston 130.

Referring to FIG. 4, the holder 172 may include a coupling part or a coupler 172a and a magnet arrangement part or a magnet holder 172b.

The coupling part 172a is a part coupled to the piston 130. The coupler 172a couples the magnet holder 172b to the piston 130. In an embodiment of the present disclosure, the coupling part 172a may be fitted onto or into and coupled to the outer circumferential surface of the piston head 131 of the piston 130. For example, the coupling part 172a may be a snap ring.

As described above, while the ring-shaped structure or member 180 is coupled to the piston head 131, the ring-shaped member 180 and the third outer diameter part 131e of the piston head 131 form a displacement member insertion groove G along the circumferential direction of the piston head 131. The coupling part 172a may have an arc shape inserted into and coupled to the displacement member insertion groove G.

The magnet 151 is arranged in the magnet arrangement part 172b to be held by the magnet arrangement part 172b. However, the magnet 151 may be mounted on the outer surface of the magnet arrangement part 172b. The magnet arrangement part 172b is connected to the coupling part 172a.

In an embodiment of the present disclosure, the magnet arrangement part 172b may have a cylinder-shaped structure in which the magnet 171 is disposed. The magnet arrangement part 172a may have an outer diameter substantially identical or similar to an inner diameter of the second chamber 116 so that the magnet arrangement part 172a can be guided by the second chamber 116 and move within the second chamber 116.

The magnet arrangement part 172b may extend in the front-rear direction and be movably disposed inside the second chamber 116. In this case, the magnet arrangement part 172b may extend in a direction orthogonal to the arc-shaped coupling part 172a.

The ring-shaped member 180 is coupled to the piston 130 to form a displacement member insertion groove G through which the displacement member 170 may be coupled to the piston 130.

Referring to FIGS. 4 and 8, the ring-shaped member 180 has an inner diameter corresponding to the first outer diameter, is fitted onto or into and coupled to the first outer diameter part 131c, is supported rearward by the support step S2, and forms a displacement member insertion groove G into which the displacement member 170 may be inserted or fitted and coupled together with the third outer diameter part 131e.

In an embodiment of the present disclosure, the ring-shaped member 180 may include a ring-shaped body 181 and a flange 182.

The ring-shaped body 181 has an inner diameter corresponding to the first outer diameter. The ring-shaped body 181 may be fitted onto or into and coupled to the first outer diameter part 131c. In this case, the ring-shaped body 181 may be assembled through the front side of the piston head 131 and be coupled to the first outer diameter part 131c.

As described above, the fourth outer diameter part 131b having the fourth outer diameter smaller than the first outer diameter of the first outer diameter part 131c is disposed in front of the first outer diameter part 131c of the piston head 131. Since the fourth outer diameter part 131b has an outer diameter smaller than an inner diameter of the ring-shaped body 181 of the ring-shaped member 180, the fourth outer diameter part 131b facilitates the ring-shaped body 181 to be mounted on the first outer diameter part 131c.

In addition, an inclined portion S1 is formed between the fourth outer diameter part 131b and the first outer diameter part 131c, and the inclined portion S1 may have a shape in which the outer diameter gradually increases from the fourth outer diameter part 131b toward the first outer diameter part 131c. This configuration allows the ring-shaped body 181 to be smoothly guided from the fourth outer diameter part 131b to the first outer diameter part 131c when the ring-shaped member 180 is assembled to the piston head 131.

The flange 182 protrudes radially outward from the ring-shaped body 181. The flange 182 may form a groove G into which the displacement member 170 may be inserted or fitted and coupled together with the third outer diameter part 131e.

In the pedal simulator 100 according to an exemplary embodiment of the present disclosure, the ring-shaped member 180 and the third outer diameter part 131e of the piston head 131 can form a displacement member insertion groove G to which the displacement member 170 may be coupled. That is, a combination of the ring-shaped member 180 and the third outer diameter part 131e provides a structure that is formed by reducing the diameter of a portion of the piston head 131 radially inward.

This configuration allows the assembly of the pedal simulator 100 to be performed by placing the piston 130 in the first chamber 115 of the housing 110, seating the displacement member 170 on the piston head 131, and then fitting and coupling the ring-shaped member 180 to the piston head 131. Accordingly, the configuration of the ring-shaped member 180 and the third outer diameter part 131e may make to the assembly and arrangement of the piston 130 and the displacement member 170 in the housing 110 easier, and can improve of the efficiency of the assembly and manufacturing of the pedal simulator 100.

Meanwhile, the flange 182 may be pressed by the additional reaction force member 145 such as a spring. In other words, the rear of the additional reaction force member 145 may be seated on the flange 182 to press the flange 182 rearward. The additional reaction force member 145 presses the ring-shaped member 180 toward the support step S2 formed between the first outer diameter part 131c and the second outer diameter part 131d. Accordingly, the coupling of the ring-shaped member 180 and the piston 130 may be stably maintained by the additional reaction force member 145.

The sensor 190 is mounted to detect displacement of the displacement member 170. The sensor 190 may detect a change in the magnetic field generated by the magnet 171 of the displacement member 170 according to forward or backward movement of the magnet 171 of the displacement member 170. For example, the sensor 190 may be a hall sensor.

The input shaft 120 and the piston 130 move forward or backward according to the displacement of the pedal of the vehicle, and the displacement member 170 may be moved forward or backward together with the piston 130 according to the forward or backward movement of the piston 130. In this process, the magnetic field generated by the magnet 171 of the displacement member 170 is changed according to the displacement of the magnet 171 of the displacement member 170.

The sensor 190 may detect the position of the displacement member 170 by detecting the change in the magnetic field. The displacement or position of the pedal of the vehicle may be measured based on the sensing information of the sensor 190.

The vehicle may be controlled according to the displacement or position of the pedal of the vehicle determined as described above. For example, the pedal may be the brake pedal 10 mounted to the brake system of the vehicle, and the magnitude of the braking force may be determined according to the displacement or position of the brake pedal 10. The pump 30 configured to generate the braking hydraulic pressure according to the determined magnitude of the braking force may generate braking hydraulic pressure corresponding to the determined magnitude of the braking force and supply the braking hydraulic pressure to the brake 50 mounted to each wheel W through the hydraulic circuit 40 of the vehicle.

Meanwhile, when the sensor 190 is used together with a separate external sensor, redundancy may be secured in relation to the detection of the displacement of the pedal of the vehicle.

The sensor 190 may be mounted on the outer surface of the housing 110. In an embodiment of the present disclosure, the sensor 190 may be mounted on the outer surface of the second chamber 116 of the housing 110.

Referring to FIG. 4, the sensor 190 may be fixed to the outer surface of the housing 110 using a fastener such as a bolt B. In addition, the sensor 190 may have a connection interface 190a for supplying power and transmitting a sensor signal or sensing information.

FIG. 16 is a graph illustrating a path of change in a reaction force with respect to an operation of a pedal when a pedal simulator is operated according to an exemplary embodiment of the present disclosure.

Referring to FIG. 16, when a pedal effort is applied to the pedal or a pedal is pressed, the piston 130 moves forward, the friction member 150 is moved forward by the piston 130, and the friction member 150 is placed in a position moved forward in the groove 112 and is in an expanded state. Accordingly, the friction member 150 provides a relatively small resistance force to the forward movement of the piston 130. That is, the friction member 150 does not significantly affect the forward movement of the piston 130, and the path of change of the reaction force (F) generated by the reaction force member 140 and transmitted to the pedal through the piston 130 and the input shaft 120 follows a first path (a) that has a relatively large reaction force compared to the stroke (S) of the pedal.

Meanwhile, when the pedal effort applied to the pedal is released or the pedal is released, the piston 130 moves backward, the friction member 150 is moved backward by the piston 130, and the friction member 150 is placed in a position moved backward in the groove 112 and is in a compressed state. Accordingly, the friction member 150 provides a relatively large resistance force to the backward movement of the piston 130. As a result, the reaction force transmitted to the pedal side is offset to a certain extent, the path of change of the reaction force (F) transmitted to the pedal follows a second path (b) that has a relatively small reaction force compared to the stroke (S) of the pedal.

As such, according to some embodiments of the present disclosure, the friction member 150 generates a relatively small resistance force when the piston 130 moves forward so that the reaction force of the reaction force member 140 can be smoothly transmitted to the driver and a stable pedal feeling can be provided. In addition, the friction member 150 generates a relatively large resistance force when the piston 130 moves backward, thereby reducing the reaction force transmitted to the pedal when the pedal returns to an original position before being pressed to reduce the fatigue felt by the driver.

In other words, according to certain embodiments of the present disclosure, the hysteresis of the path of change of the reaction force with respect to the operation of the pedal may be increased. Accordingly, it is possible to improve the pedal feeling and reduce the fatigue of the driver.

According to the above configuration, the pedal simulator according to an aspect of the present disclosure may allow the driver to feel a natural and stable pedal feeling through a friction member arranged to provide resistance to the piston moving forward or backward according to the pedal displacement but to provide different resistance when the piston moves forward and backward, respectively.

The pedal simulator according to an aspect of the present disclosure may improve the pedal feeling and reduce the driver's fatigue through a friction member that increases the hysteresis of the path of change in reaction force according to the pedal stroke.

It should be understood that the effects of the present disclosure are not limited to the above-described effects, and include all effects inferable from a configuration of the invention described in detailed descriptions or claims of the present disclosure.

Although embodiments of the present disclosure have been described, the spirit of the present disclosure is not limited by the embodiments presented in the specification. Those skilled in the art who understand the spirit of the present disclosure will be able to easily suggest other embodiments by adding, changing, deleting, or adding components within the scope of the same spirit, but this will also be included within the scope of the spirit of the present disclosure.

## Claims

1. A pedal simulator (100) comprising:
a piston (130) connected to a pedal (10) of a vehicle, and configured to be movable in response to movement of the pedal (10); and
a friction member (150) movably disposed in a housing (110) to be movable in first and second directions and having elastic material configured to be deformable such that the friction member (150) is compressed when being moved in the second direction and the friction member (150) is expanded when being moved in the first direction opposite to the second direction, wherein the friction member (150) is in contact with the piston (130) to apply friction to the movement of the piston (130) and move in a same direction as the movement of piston (130).

2. A pedal simulator (100) of claim 1, comprising:
a reaction force member (140) having compressible material configured to be compressible by movement of the piston (130) in the first direction to provide a reaction force against the movement of the piston (130) in the second direction opposite to the first direction.

3. The pedal simulator (100) of claim 1 or 2, wherein the friction member (150) has a ring shape surrounding an outer surface of the piston (130).

4. The pedal simulator (100) of claim 3, wherein the friction member (150) comprises a portion having a radial thickness that increases in the first direction.

5. The pedal simulator (100) of one of claims 1 to 4, wherein:
the housing (110) comprises a groove (112) in which the friction member (150) is movably disposed such that the friction member (150) is movable within the groove (112) of the housing (110) in the first and second directions, and
a depth of the groove (112) of the housing (110) in which the friction member (150) is movably disposed increases in the first direction.

6. The pedal simulator (100) of claim 5, wherein the groove (112) of the housing (110) in which the friction member (150) is movably disposed has a maximum depth equal to or greater than a maximum thickness of the friction member (150) and a minimum depth less than a minimum thickness of the friction member (150).

7. The pedal simulator (100) of claim 5 or 6, wherein:
the housing (110) comprises a guide tube (111) in which a portion of the piston (130) is disposed, and
the groove (112) of the housing (110) in which the friction member (150) is movably disposed is provided on an inner surface of the guide tube (111).

8. The pedal simulator (100) of claim 7, wherein:
the housing (110) further comprises a chamber (115) connected with the guide tube (111).

9. The pedal simulator (100) of claim 7, wherein:
the housing (110) further comprises a chamber (115) connected with the guide tube (111) and accommodating the reaction force member (140), and
the pedal simulator (100) further comprises another reaction force member (145) disposed in the chamber (115) where the reaction force member (140) is located to provide resistance force against the movement of the piston (130) in the second direction.

10. The pedal simulator (100) of claim 8 or 9,
wherein the piston (130) comprises:
a piston head (131) positioned to be in contact with the reaction force member (140) and disposed in the chamber (115) of the housing (110); and
a piston body (132) connected to the piston head, wherein a portion of the piston body (132) is movably disposed in the guide tube (111) of the housing (110).

11. The pedal simulator (100) of one of claims 7 to 10, wherein:
the housing (110) further comprises a first invaginated portion (113) located to be spaced apart from the groove (112) of the housing (110) and invaginated into an inner surface of the guide tube (111), and
the pedal simulator (100) further comprises a first guide member (160a) arranged in the first invaginated portion (113) and supporting the piston body (132).

12. The pedal simulator (100) of claim 11, wherein:
the housing (110) further comprises a second invaginated portion (114) located to be spaced apart from the groove (112) of the housing (110) and invaginated into the inner surface of the guide tube (111), wherein the groove (112) of the housing (110) is positioned between the first invaginated (113) portion and the second invaginated portion (114) of the housing (110), and
the pedal simulator (100) further comprises a second guide member (116b) arranged in the second invaginated portion (114) and supporting the piston body (132).
